# EUROPEAN PATENT APPLICATION

(11) **EP 1 972 578 A1**
(43) Date of publication of application: **24.09.2008**
(21) Application number: 07104439.0
(22) Date of filing: 19.03.2007
(51) Int. Cl.: B65G 47/08

(54) **Unit and method for grouping packages along a transfer path**

(71) Applicant: Tetra Laval Holdings & Finance SA, 1009 Pully (CH)
(72) Inventor: Aronsson, Niclas, 41100 Modena (IT); Hansson, Fredrik, 451 30 Uddevalla (SE)
(74) Representative: Jorio, Paolo

(57) **Abstract**

There is described a unit (1) for grouping packages (2) along a transfer path (T), and having an input station (5) receiving groups (3) of packages (2) arranged in longitudinal lines parallel to the transfer path (T); and aligning means (45, 46; 62) which interact with the packages (2) of each group (3) to align them in at least one line crosswise to the transfer path (T). The unit (1) has a rotation device (60) which, following interaction of the aligning means (45, 46; 62)) with the packages (2) in each group (3), is selectively activated to rotate the packages (2) in each group (3) by a predetermined angle about a direction (A) crosswise to the transfer path (T).

## Description

The present invention relates to a unit and method for grouping packages along a transfer path.

In the following description and Claims, the term "package" is used in its widest sense to indicate any container for packaging liquid or pourable food products, and therefore includes, not only packets made of multilayer sheet material and similar, to which reference is made hereinafter purely by way of example, but also glass or plastic bottles, tins, etc.

As is known, many pourable food products, such as fruit juice, UHT (ultra-high-temperature treated) milk, wine, tomato sauce, etc., are sold in packages made of sterilized sheet packaging material.

A typical example of this type of package is the parallelepiped-shaped package for liquid or pourable food products known as Tetra Brik Aseptic (registered trademark), which is made by folding and sealing laminated strip packaging material. The packaging material has a multilayer structure comprising a layer of base material, e.g. paper, covered on both sides with layers of heat-seal plastic material, e.g. polyethylene. In the case of aseptic packages for long-storage products, such as UHT milk, the packaging material comprises a layer of oxygen-barrier material, e.g. aluminium foil, which is superimposed on a layer of heat-seal plastic material, and is in turn covered with another layer of heat-seal plastic material eventually forming the inner face of the package contacting the food product.

As is known, packages of this sort are produced on fully automatic packaging lines, on which a continuous tube is formed from the web-fed packaging material; the web of packaging material is sterilized, e.g. by applying a chemical sterilizing agent such as a hydrogen peroxide solution, which is subsequently removed from the surfaces of the packaging material, e.g. evaporated by heating; and the web of packaging material so sterilized is maintained in a closed, sterile environment, and is folded and sealed longitudinally to form a vertical tube.

The tube is filled with the sterilized or sterile-processed food product, and is sealed and subsequently cut along equally spaced cross sections to form pillow packs, which are folded mechanically to form respective finished, e.g. substantially parallelepiped-shaped, packages.

Alternatively, the packaging material may be cut into blanks, which are formed into packages on forming spindles, and the packages are filled with the food product and sealed. One example of this type of package is the so-called "gable-top" package known by the trade name Tetra Rex (registered trademark).

In both the above cases, the finished packages are fed successively to a grouping unit, where they are formed into separate groups of a given number, which are eventually packed in packing material, e.g. cardboard or plastic film, to form respective packs for transport to retailers.

More specifically, the packages are fed to the grouping unit in lines parallel to the travelling direction, and are temporarily accumulated at a receiving station; a predetermined number of packages at the receiving station are then fed onto a conveyor for transfer to an output station. Along the path defined by the conveyor, the packages in each group are aligned into one or more lines crosswise to the travelling direction, and are then pushed to the output station, where they are packed in packing material to form a relative pack.

One example of a known grouping unit, suitable for grouping plastic bottles, is illustrated in US Patent US 6,793,064.

More specifically, the above unit substantially comprises a continuous belt conveyor having a straight flat conveying branch, onto which the bottles are fed, at predetermined time intervals and in groups of a predetermined number, for transfer to a downstream packing station, where each group of bottles so formed is packed for delivery to retailers.

As they are fed to the packing station, the bottles in each group are first aligned into a specific configuration, and are then pushed, in that configuration, to the packing station. This is done by means of two separate mechanisms - an aligning mechanism and a push mechanism - arranged in succession in the travelling direction of the bottles.

The aligning mechanism comprises a number of aligning bars extending crosswise to the travelling direction of the bottles, and which are fed by a chain drive device along an endless path having a portion facing and parallel to the conveying branch of the conveyor.

Each group of bottles fed onto the conveyor comes to rest against a relative downstream aligning bar travelling slower than the conveyor.

The aligning bars therefore provide for slowing the bottles down slightly with respect to the speed of the conveyor, so as to compact the bottles in the travelling direction and align them into one or more lines crosswise to the travelling direction.

The push mechanism is located downstream from the aligning mechanism in the travelling direction of the bottles, and, like the aligning mechanism, comprises a number of push bars extending crosswise to the travelling direction of the bottles, and which are fed by a further chain drive device along an endless path having a portion facing and parallel to the conveying branch of the conveyor.

Where the aligning bars release the relative groups of bottles, each push bar interacts with the upstream side of the bottles in each group to push the group to the packing station at the same speed as the conveyor.

Demand exists within the industry for maximum flexibility in the way the groups of packages are oriented for transfer from the grouping unit to the packing station.

This is particularly desirable to enable interfacing of the grouping unit with various types of packing units variously oriented with respect to the grouping unit.

It is an object of the present invention to provide a package grouping unit designed to meet the above demand, relative to known units, in a straightforward manner.

According to the present invention, there is provided a unit for grouping packages along a transfer path, as claimed in Claim 1.

The present invention also relates to a method of grouping packages along a transfer path, as claimed in Claim 22.

A preferred, non-limiting embodiment of the present invention will be described by way of example with reference to the accompanying drawings, in which:
Figure 1 shows a view in perspective, with parts removed for clarity, of a package grouping unit in accordance with the teachings of the present invention;
Figure 2 shows a side view of the Figure 1 unit;
Figures 3a to 3f show, schematically, successive operating configurations of a rotation device of the Figure 1 unit;
Figures 4, 5 and 6 show top plan views of the Figure 1 unit rotation device in the Figure 3a, 3c and 3d operating configurations respectively;
Figures 7 and 8 show top plan views, in a first and second position respectively, of a guide mechanism of the Figure 1 unit, for guiding the rotation device in Figures 3a, 3b, 3c, 3d, 3e, 3f, 4, 5 and 6 along a predetermined trajectory.

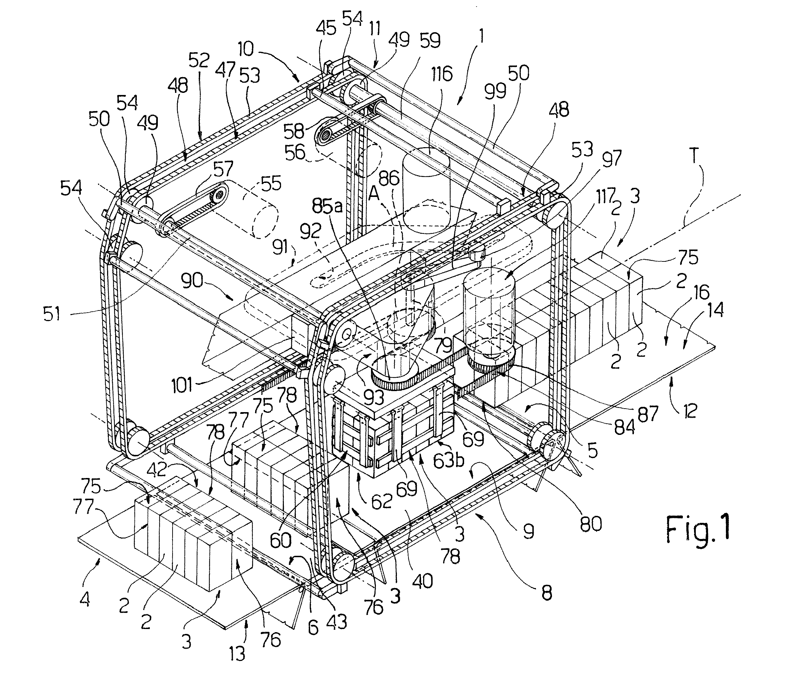

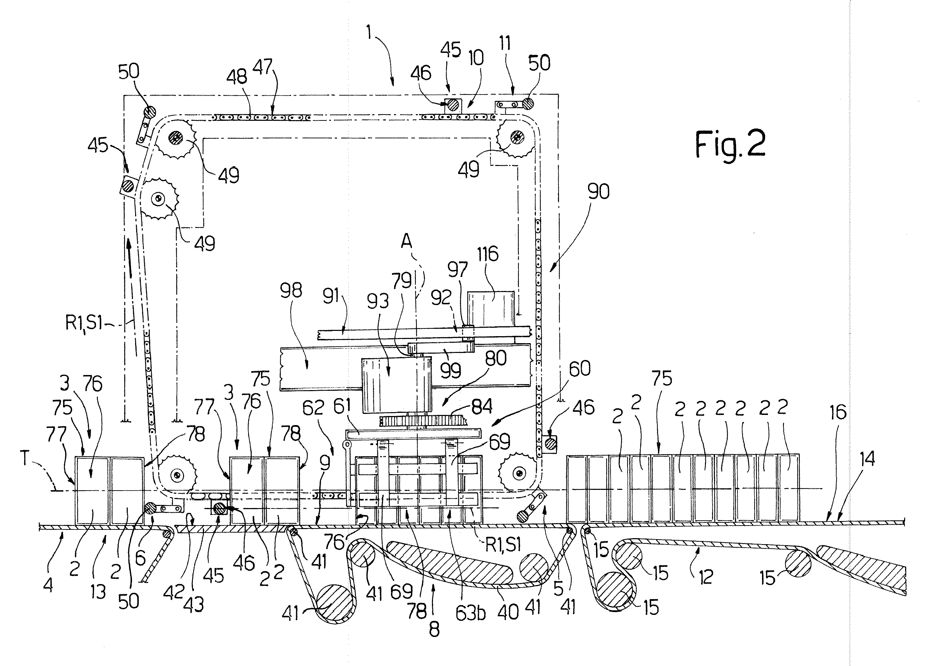

With reference to Figures 1 and 2, number 1 indicates as a whole a unit in accordance with the present invention for grouping packages 2 along a transfer path T - in the example shown, a straight transfer path. More specifically, unit 1 provides for separating packages 2 into groups 3, of a predetermined number and configuration, for supply to a packing unit 4 (shown only partly in Figures 1 and 2) where groups 3 are packed in packing material (not shown), e.g. cardboard or plastic film, to form relative packs for transport to retailers.

In the example shown, packages 2 are defined by parallelepiped-shaped packets made, as described previously in detail, of multilayer sheet packaging material, which is filled with a pourable food product, such as pasteurized or UHT milk, fruit juice, wine, etc., and sealed.

Alternatively, packages 2 may be defined by a number of packets held together by packing material, e.g. plastic film, or may be defined by other types of packaging containers, such as bottles, tins, etc.

Unit 1 substantially comprises an input station 5 for receiving packages 2 arranged in longitudinal lines parallel to path T; an output station 6 for groups 3 comprising a given number of packages 2 from respective longitudinal lines and aligned in one or more lines crosswise to path T; a conveyor 8 defining a moving conveying surface 9 fed at predetermined intervals with a number of packages 2 equal to that of each group 3, and which feeds packages 2 from input station 5 to output station 6 along path T; an aligning device 10, which interacts with packages 2 on conveyor 8 to align them into one or more lines crosswise to path T as they travel towards output station 6; and a push device 11, which interacts with groups 3 of aligned packages 2 to push the groups out of unit 1.

More specifically, packages 2 are fed to input station 5 by a step-operated belt conveyor 12, and, once formed into separate groups 3, are fed from output station 6 to a further belt conveyor 13 forming part of packing unit 4 and shown only partly in the accompanying drawings.

More specifically, conveyor 12 comprises a belt 14 looped about a number of rollers 15 - at least one of which is powered - and defining, for packages 2, a flat horizontal top conveying surface 16 coplanar with and upstream from conveying surface 9 of conveyor 8.

In known manner, conveyor 12 is driven by a servomotor (not shown) for time intervals of a length depending on the number of packages 2 to be fed, at each drive step of conveyor 12, to input station 5 to form a relative group 3.

That is, for each drive step of conveyor 12, a given number of packages 2 are transferred from a downstream portion of conveying surface 16 of conveyor 12 to input station 5 of unit 1, defined by an upstream portion of conveying surface 9 of conveyor 8. Each drive step is followed by a pause, in which packages 2 are accumulated on said downstream portion of conveying surface 16.

The number of packages 2 fed to conveyor 8 is controlled in known manner by sensors, e.g. optical sensors, not shown in the drawings, by not being essential to a clear understanding of the present invention.

A retaining device (not shown), activated synchronously with the pauses of conveyor 12, is preferably provided to hold back the queue of packages 2 waiting to be fed to input station 5.

Packages 2 in each group 3 are aligned while on conveyor 8, which is preferably a belt conveyor and is driven continuously at constant or variable speed by a known servomotor (not shown).

With particular reference to Figures 1 and 2, conveyor 8 substantially comprises a belt 40 looped about a number of rollers 41 - at least one of which is connected to said servomotor - and defining top conveying surface 9 for packages 2.

Output station 6 is defined by a decelerating surface 42 coplanar with and downstream from conveying surface 9, and which slows down groups 3 of packages 2 prior to transfer to packing unit 4.

Decelerating surface 42 is preferably defined by a fixed horizontal surface 43 interposed between conveyors 8 and 13.

Alternatively, decelerating surface 42 may be defined by a movable surface moving slower than conveying surface 9, or solely by conveying surface 9 itself.

Aligning device 10 comprises one or more bar-type aligning members 45, which extend perpendicularly to the travelling direction of packages 2, move cyclically along a path R having a work portion R₁ parallel to path T from input station 5 to output station 6, and each define an aligning surface 46 against which, at each cycle, the packages 2 of a relative upstream group 3 come to rest and are aligned in one or more lines crosswise to path T.

In the example shown, aligning members 45 are eight in number (not all shown in Figure 2) and are fitted, equally spaced, to a chain conveyor 47 located over conveying surface 9 of conveyor 8 and over decelerating surface 42.

More specifically, conveyor 47 comprises two identical endless chains 48, which extend on opposite sides of conveying surface 9 of conveyor 8 and decelerating surface 42, support aligning members 45 in between, and define path R of aligning members 45.

Each chain 48 is looped about a relative number of rollers 49 to assume a roughly rectangular configuration, with two sides parallel to conveying surface 9 of conveyor 8 and to decelerating surface 42, and two sides perpendicular to surfaces 9, 42.

In exactly the same way as aligning device 10, push device 11 comprises one or more bar-type push members 50, which extend perpendicularly to the travelling direction of packages 2, move cyclically along a path S having a work portion S₁ parallel to path T from input station 5 to output station 6, and each define a push surface 51 which, at each cycle, acts on each group 3 of packages 2 downstream from push member 50 to push group 3 out of unit 1.

Push members 50 are eight in number (not all shown and indicated in Figures 1 and 2) and are fitted, equally spaced, to a chain conveyor 52 identical to conveyor 47 and located over conveying surface 9 of conveyor 8 and over decelerating surface 42.

More specifically, conveyor 52 comprises two identical endless chains 53, which extend on opposite sides of conveying surface 9 of conveyor 8 and decelerating surface 42, support push members 50 in between, and define path S of push members 50.

More specifically, chains 48 of conveyor 47 and chains 53 of conveyor 52 are positioned parallel and facing each other, so that paths R and S defined by them coincide.

As shown in Figure 1, each chain 53 is looped about a relative number of rollers 54, coaxial with respective rollers 49, to assume the same roughly rectangular configuration as chains 48, with two sides parallel to conveying surface 9 of conveyor 8 and to decelerating surface 42, and two sides perpendicular to surfaces 9, 42.

In other words, chains 48 and 53 are coplanar along each of the four sides along which they extend.

In the example shown, chains 48 are located between the more outer chains 53.

Conveyors 47 and 52 are driven by respective independent servomotors 55, 56.

As shown in Figure 1, each servomotor 55, 56 controls the relative pair of chains 48, 53 by means of a respective belt drive 57, 58 connecting an output shaft of servomotor 55, 56 to a shaft 51, 59 supporting a relative pair of rollers 49, 54; the other rollers 54, 49, coaxial with those (49, 54) powered by servomotor 55, 56, and supporting the other two chains 53, 48, are fitted idly to the relative shaft 51, 59 driven by servomotor 55, 56.

In a preferred embodiment of the present invention, chains 48, and therefore aligning members 45, are driven intermittently by relative servomotor 55, whereas chains 53, and therefore push members 50, are driven continuously by relative servomotor 56.

In the example shown, chains 48 and aligning members 45 are synchronized with conveyor 12 supplying packages 2 to conveyor 8.

Each aligning member 45 extends - in a manner not shown, in that not necessary to a clear understanding of the present invention - between the links of chains 48 to which it is fixed; whereas each push member 50 extends between corresponding links of chains 53 located downstream, in the travelling direction of chains 53, from the links to which it is fixed, so that, at output station 6 (Figure 2), push members 50 project with respect to relative chains 53 in the direction of path T to accompany groups 3 of packages 2 onto an upstream portion of conveyor 13 of packing unit 4.

Unit 1 advantageously comprises a rotation device 60, which can be activated selectively to rotate packages 2 in each group 3 - after they interact with aligning surface 46 - by a predetermined angle about a direction A crosswise to the direction of path T.

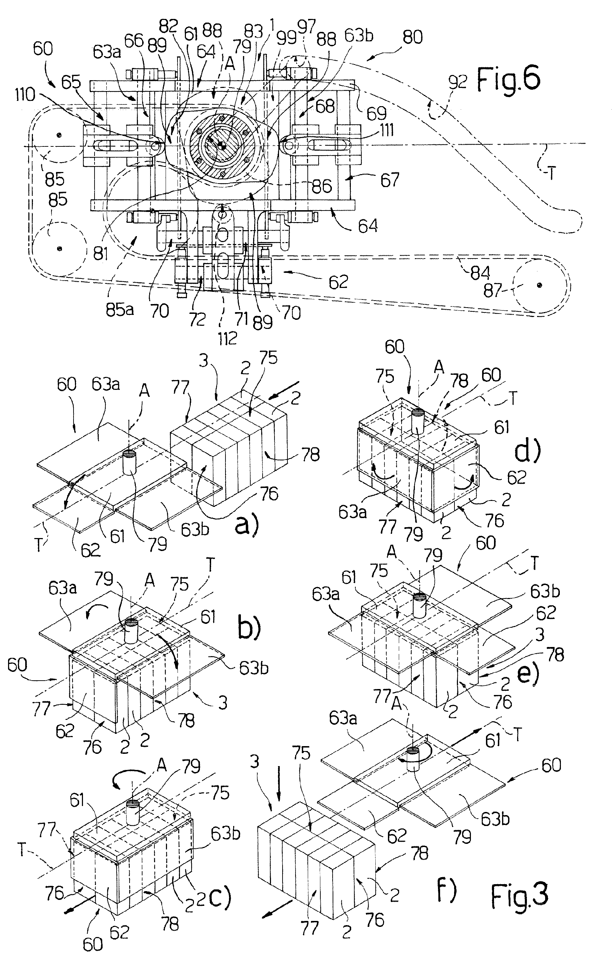

More specifically, rotation device 60 rotates group 3 ninety degrees anticlockwise (Figures 3c and 3d) about a vertical direction A perpendicular to conveying surface 9.

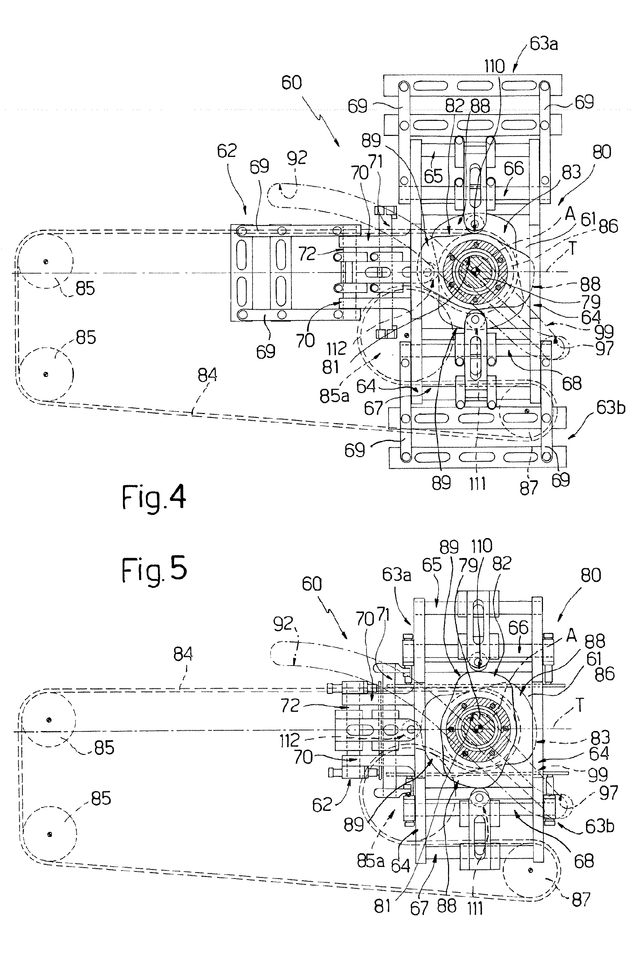

Unit 1 also comprises an actuating mechanism 80 (Figures 4 to 6), which interacts with rotation device 60 to move it between an open configuration (Figure 3a) and a closed configuration (Figures 3c and 3d) via an intermediate configuration (Figure 3b).

More specifically, rotation device 60 is integral with each group 3 in the closed configuration, and is detached from group 3 in the open configuration.

Unit 1 also comprises a guide mechanism 90, which interacts with rotation device 60 to move it along a trajectory having a translation component parallel to the direction of path T, and a rotation component about direction A.

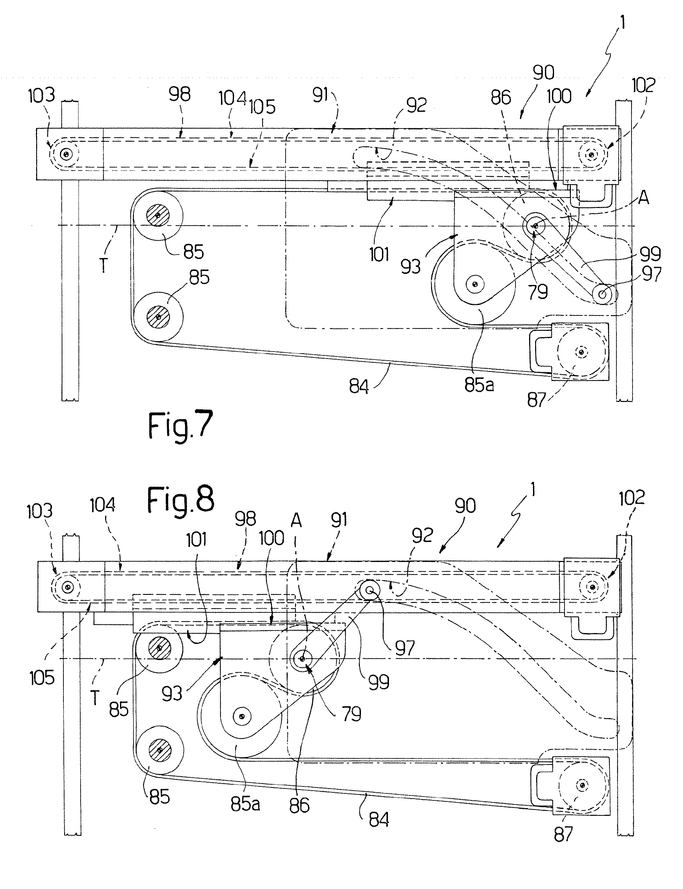

More specifically, guide mechanism 90 moves rotation device 60 through a forward stroke (shown schematically in Figures 3a to 3e) from a start position shown in Figures 4, 5 and 7, into an end position shown in Figures 6 and 8.

More specifically, rotation device 60 is located adjacent to input station 5 in the start position, and adjacent to output station 6 in the end position.

Rotation device 60 performs the forward stroke in the closed configuration, and, as it does so, rotates each group 3 ninety degrees anticlockwise about direction A, and translates group 3, in a direction parallel to path T, to output station 6.

At the end of the forward stroke, rotation device 60 moves into the open configuration, and guide mechanism 90 moves rotation device 60 through a return stroke back into the start position.

As shown schematically in Figure 3f, during the return stroke, rotation device 60 rotates clockwise about direction A and translates in the opposite direction to the forward stroke.

More specifically, rotation device 60 (Figures 4, 5, 6) comprises two parallel sides 64 spaced apart; a rectangular plate 61 parallel to conveying surface 9 and extending between sides 64; and three flaps 62, 63a, 63b, which rotate with respect to sides 64 and plate 61.

More specifically, sides 64 have first end portions connected by two pins 65, 66; and second end portions opposite the first end portions and connected by two pins 67, 68.

Pins 65, 66 and 67, 68 extend along respective axes parallel to conveying surface 9; and pins 66, 68 are interposed between plate 61 and pins 65, 67.

Flap 63a (Figure 4) comprises two parallel rods 69, each hinged at one end to pin 66; and two cross members extending perpendicularly to rods 69.

Similarly, flap 63b (Figure 4) comprises two parallel rods 69, each hinged at one end to pin 68; and two cross members extending perpendicularly to rods 69.

Two projections 70 project from an intermediate portion of one of sides 64, on the opposite side to plate 61, and extend in respective directions perpendicular to the extension direction of side 64.

Projections 70 are fitted through with two pins 71, 72 extending parallel to side 64. More specifically, pin 71 is interposed between pin 72 and side 64 from which projections 70 project.

Flap 62 comprises two parallel rods 69, each hinged at one end to pin 72; and two cross members extending between and perpendicularly to rods 69.

When rotation device 60 is in the open configuration (Figures 3a, 3f, 4), flaps 63a, 63b, 62 extend in the same plane parallel to conveying surface 9 and coincident with the plane of plate 61.

When rotation device 60 is in the intermediate configuration (Figure 3b), flap 62 is rotated, with respect to the open configuration, ninety degrees about pin 72 into a plane perpendicular to conveying surface 9 of conveyor 8.

When rotation device 60 is moved by actuating mechanism 80 into the closed configuration (Figures 3c, 3d, 5, 6), flaps 63a, 63b are also rotated, with respect to the open and intermediate configurations, ninety degrees about pins 66, 68 into respective planes perpendicular to conveying surface 9 of conveyor 8.

In the closed configuration, plate 61 cooperates with a surface 75 defining group 3 on the opposite side to conveying surface 9.

More specifically, surface 75 (Figures 1, 2, 3a, 3b, 3c, 3d, 3e, 3f) is defined by the walls of packages 2 in each group 3 on the opposite side to conveying surface 9.

In the closed configuration, flap 62 (Figures 2, 3c, 3d) cooperates with an end surface 76 of each group 3.

More specifically, surface 76 (Figures 3a, 3b, 3c) defines a downstream end of group 3, prior to rotation of group 3 by rotation device 60; whereas, once group 3 is rotated ninety degrees anticlockwise by the rotation device, surface 76 (Figures 2, 3d, 3e, 3f) defines a lateral end of group 3 with respect to a centre plane, parallel to path T, of conveying surface 9.

Flaps 63a, 63b (Figures 3c, 3d) cooperate with respective end surfaces 77, 78 of each group 3.

More specifically, surfaces 77, 78 define each group 3 on respective opposite sides of said centre plane of conveying surface 9, prior to rotation of group 3 by rotation device 60.

Once group 3 is rotated ninety degrees anticlockwise by rotation device 60, surfaces 77, 78 define group 3 downstream and upstream of path T respectively.

Once each group 3 is rotated ninety degrees anticlockwise, surfaces 77 and 78 define each group 3 downstream and upstream of path T respectively, while surface 76 defines group 3 laterally.

When rotation device 60 is in the closed configuration, flaps 63a, 63b lie in parallel planes perpendicular to the plane of flap 62.

With particular reference to Figures 7 and 8, guide mechanism 90 comprises a plate 91 secured to a fixed structure of unit 1 and defining a through slot 92 having a shape associated with the trajectory of rotation device 60 and, therefore, of each group 3.

Guide mechanism 90 also comprises a body 93 interposed between plates 61 and 91, and which slides parallel to path T; and a pin 79 (indicated schematically in Figure 1 and shown in Figures 2 to 8).

Pin 79 comprises a first end, which, in use, is a top end angularly integral with a roller 97 rolling along slot 92; and a second end axially opposite the first end, and which, in use, is a bottom end fixed to plate 61.

More specifically, pin 79 extends along an axis parallel to and coincident with direction A, and is connected to roller 97 by a lever 99 extending parallel to conveying surface 9. More specifically, lever 99 is connected at opposite ends to pin 79 and roller 97.

Plate 91 extends parallel to conveying surface 9, and slot 92 is elongated in a direction parallel to path T.

Slot 92 is curved, and has a first end over an upstream end of conveying surface 9; and a second end opposite the first end and over an intermediate portion of conveying surface 9 between input station 5 and output station 6.

More specifically, the first end of slot 92 is over a first lateral portion of conveying surface 9, the second end of slot 92 is over a second lateral portion of conveying surface 9, and the first and second lateral portion are located on opposite sides of a centre plane, parallel to path T, of conveying surface 9.

Body 93 is connected functionally to a powered belt 98 (Figures 2, 7, 8) to slide parallel to path T.

More specifically, the first end of pin 79 (Figure 1) is housed inside body 93.

Pin 79 is housed inside body 93 so as to rotate about direction A.

Pin 79 also slides, integrally with body 93, in a direction parallel to path T.

Body 93 also comprises two isosceles-trapezium-shaped walls lying in respective horizontal planes parallel to conveying surface 9; and a wall 100 (Figures 7 and 8) perpendicular to conveying surface 9 and connected by a member 101 to belt 98.

More specifically, belt 98 extends about a pulley 102 (Figures 7 and 8) rotated by a motor 116 (Figures 1 and 2), and about a return pulley 103, and comprises two branches 104, 105 extending between pulleys 102 and 103 and parallel to path T.

Branch 105 is connected by member 101 to wall 100, and translates wall 100, and therefore body 93, in a direction parallel to path T.

Branch 104 is located on the opposite side of branch 105 to wall 100.

With particular reference to Figures 4 to 6, actuating mechanism 80 comprises a cam 82 for rotating flaps 63a, 63b about respective pins 66, 68; a cam 83 for rotating flap 62 about pin 72; and a motor 117 (only shown schematically in Figure 1) connected functionally by belt 84 to cams 82, 83.

More specifically, belt 84 extends about a drive pulley 87 driven by motor 117; about a pulley 86 angularly integral with cams 82, 83; and about a number of return pulleys 85, 85a interposed, along the path of belt 84, between pulleys 86 and 87.

In the example shown, cams 82, 83 and pulley 86 rotate integrally about an axis coincident with direction A.

More specifically, the axes of pulleys 85, 85a, 87 are parallel to direction A.

The axes of pulleys 85, 87 are fixed, whereas those of pulleys 85a, 86 are movable parallel to path T.

Cams 82, 83 are elongated crosswise to each other, and each have two operating lobes 88, 89.

More specifically, lobes 88, 89 are located at opposite longitudinal ends of cams 82, 83, so that lobes 88, 89 of each cam 82, 83 are 180° out of phase with respect to the axis of rotation of cams 82, 83.

More specifically, cam 82 is shaped with a convex portion between lobes 88 and 89, and cam 83 is shaped with a concave portion between lobes 88 and 89.

Lobes 88, 89 of cams 82, 83 cooperate with cam followers 110, 111, 112 on respective flaps 63a, 63b, 62.

More specifically, when lobes 88, 89 of cam 82 are detached from cam followers 110, 111, and lobes 88, 89 of cam 83 are detached from cam follower 112, flaps 63a, 63b, 62 (Figures 3a, 3f, 4) lie in respective planes parallel to conveying surface 9, and rotation device 60 is in the open configuration.

Conversely, when lobes 88, 89 of cam 82 contact cam followers 110, 111, and lobe 89 of cam 83 contacts cam follower 112, flaps 63a, 63b, 62 (Figures 3c, 3d, 5, 6) lie in respective planes perpendicular to conveying surface 9, and rotation device 60 is in the closed configuration.

More specifically, rotation device 60 passes from the open configuration to the closed configuration by rotating cams 82, 83 roughly ninety degrees clockwise from the Figure 4 position to the Figure 5 position.

Cam 82 is designed so that rotation of pulley 86 brings both its lobes 88, 89 (Figures 5 and 6) simultaneously into contact with respective cam followers 110, 111 of respective flaps 63a, 63b.

Flaps 63a, 63b therefore rotate simultaneously (Figure 3c) onto respective surfaces 77, 78.

Lobes 88, 89 of cams 82, 83 are so arranged that rotation of pulley 86 first causes cam 83 to interact with cam follower 112 of flap 62, and then cam 82 to interact with cam followers 110, 111 of flaps 63a, 63b.

As shown in Figure 3b, flap 62 therefore rotates downwards about pin 71 onto surface 76 before flaps 63a, 63b rotate downwards about respective pins 66, 68 onto respective surfaces 77, 78 of each group 3.

Pulley 86 and cams 82, 83 are interposed vertically between plate 61 and body 93.

More specifically, body 93 is located, in use, over cam 82, which in turn is located over cam 83; and cam 83 is located, in use, over pulley 86.

Similarly, the respective active portions of cam followers 110, 111 cooperating with cam 82 are located, in use, higher up than the active portion of cam follower 112 cooperating with cam 83.

A hole 81 extends coaxially through pulley 86 and cams 82, 83, and has an axis coincident with direction A.

The second end of pin 79 extends, radially loosely, through hole 81 (Figures 4, 5, 6), so that pin 79 and cams 82, 83 are angularly disconnected.

In other words, pin 79 extends between plate 61 and lever 99, and, proceeding from plate 61 to lever 99, has its second end fitted through cams 82, 83, and its first end fitted through body 93.

The first end and second end of pin 79 are housed inside body 93 and cams 82, 83, respectively, with a small amount of radial clearance (shown in Figures 4, 5, 6), so that pin 79 is angularly movable with respect to both cams 82, 83 and body 93.

Consequently, as roller 97 rolls along slot 92, rotation of pin 79 fails to rotate cams 82, 83, and rotation device 60 therefore remains in the closed configuration as it moves forward.

Similarly, rotation device 60 remains in the open configuration as it moves back.

On the other hand, once said radial clearance is taken up, translation of body 93 draws along pin 79 in direct contact with it.

Pulley 86 is also connected to body 93, and moves with it in a direction parallel to path T.

Operation of unit 1 will be described with reference to the formation of one group 3 of packages 2, and as of an initial condition (Figure 2), in which conveyor 12 is stationary, the packages 2 eventually forming group 3 are accumulated on the downstream portion of conveying surface 16 of conveyor 12, and the retaining device is in the retaining position, relieving the pressure of the queue of packages 2 accumulated on conveying surface 16.

When conveyor 12 is activated, the retaining device is moved into a release position to allow a given number of packages 2 to be fed onto conveyor 8.

The packages 2 transferred from conveyor 12 to conveyor 8 come to rest against aligning surface 46 of an aligning member 45 travelling through input station 5.

Once the predetermined number of packages 2 is fed off conveyor 12, this is arrested, and the retaining device (not shown) is moved into the retaining position.

The group 3 of packages 2 fed onto conveyor 8, on the other hand, is fed by conveyor 8 along path T to output station 6.

In the course of which, conveyor 47, supporting aligning members 45, is stopped and then started again at a faster speed than conveyor 8; packages 2 are therefore first grouped together against the relative stationary aligning member 45, and are aligned in lines - in this case, two lines - crosswise to path T; and, when the aligning member 45 is detached from packages 2 and started moving again along path R, packages 2 are fed by conveyor 8 to fixed surface 43.

Further forward movement of packages 2 in group 3 brings them up to rotation device 60 set in the start position and the open configuration (Figures 3a, 4); at which point, roller 97 is located at the upstream end of slot 92, as shown in Figures 4 and 5.

Motor 117 then rotates belt 84 and, by means of pulley 86, cams 82 and 83.

Rotation of pulley 86 (Figure 5) first brings lobe 89 of cam 83 into contact with cam follower 112 of flap 62, which therefore rotates about pin 71 onto surface 76 of group 3 (Figure 3b).

Further rotation of pulley 86 brings lobes 88, 89 of cam 82 into contact with cam followers 110, 111 of flaps 63a, 63b, which therefore rotate about pins 66, 68 onto surfaces 77, 78 of group 3 (Figures 3c, 5).

Rotation device 60 is now in the closed configuration and the start position, with flaps 62, 63a, 63b gripping group 3.

Motor 116 is now operated to move belt 98, and so translate body 93, in a direction parallel to path T and towards output station 6.

Translation of body 93 also results in translation of pulley 85a, pin 79, and pulley 86.

By means of lever 99, translation of pin 79 causes roller 97 to roll along slot 92 from the Figure 4 and 5 position to the Figure 6 position.

Roller 97 rolls along a curved trajectory defined by the shape of slot 92, and, by means of lever 99, rotates pin 79 about its axis coincident with direction A.

Pin 79 and rotation device 60 are integral.

Consequently, the rotary-translatory movement of pin 79 causes rotation device 60 and group 3 to translate parallel to path T and rotate about direction A.

It is important to note that, during the forward and return stroke, rotation of pin 79 about its axis produces no rotation of cams 82, 83 and, therefore, no rotation of flaps 63a, 63b, 62.

This is due to pin 79 being housed radially loosely inside hole 81 defined by cams 82, 83, and so being angularly movable with respect to cams 82, 83.

Roller 97 is arrested (Figure 6) against the downstream end of slot 92; at which point, rotation device 60 is arrested in the end position (Figure 3d).

Motor 117 is again operated to rotate cams 82, 83 and detach cam followers 110, 111, 112 from lobes 88, 89 of cams 82, 83.

As a result, flaps 63a, 63b, 62 are detached from surfaces 77, 78, 76 and restored parallel to conveying surface 9.

Rotation device 60 is now in the end position and the open configuration (Figure 3e).

Motor 116 is reversed, so that guide mechanism 90 restores rotation device 60 to the start position and the closed configuration.

It is important to note that translation of body 93 parallel to path T produces a like translation of movable-axis pulleys 86, 85a.

To prevent translation of pulley 86 from driving belt 84 and so resulting in undesired rotation of cams 82, 83, motor 117 is appropriately operated, during the forward and return strokes, to keep belt 84 stationary and, consequently, cams 82, 83 angularly fixed.

On reaching fixed surface 43, packages 2 in group 3, rotated ninety degrees with respect to direction A, are first slowed down and eventually stopped by fixed surface 43. That is, at the output of conveyor 8, packages 2 slide to a halt on fixed surface 43.

Next, the adjacent push member 50, upstream from the group 3 of packages 2 arrested on fixed surface 43, catches up with and pushes the downstream packages 2 out of unit 1 onto conveyor 13 of packing unit 4.

The advantages of unit 1 and the method according to the present invention will be clear from the foregoing description.

In particular, by virtue of rotation device 60, unit 1 provides for effectively aligning packages 2 of groups 3 into lines crosswise to path T, and at the same time allows a high degree of flexibility in the way in which groups 3 are oriented for transfer to packing unit 4.

As a result, unit 1 can be interfaced with packing units 4 of various types, with no restriction in the position of packing unit 4 with respect to unit 1.

The flexibility of the unit is also achieved with no reduction in the output rate of groups 3 to packing unit 4, by virtue of groups 3 being rotated as they travel along path T.

Moreover, the flexibility of unit 1 is achieved in a highly compact manner, by involving no separate space for guide mechanism 90 and actuating mechanism 80.

Space saving and compactness, in fact, are achieved by pin 79 of guide mechanism 90 being housed inside cams 82, 83 of actuating mechanism 80.

Clearly, changes may be made to unit 1 and the method as described and illustrated herein without, however, departing from the scope defined in the accompanying Claims.

In particular, aligning members 45 of unit 1 may be eliminated for low travelling speeds of conveying surface 9.

In which case, packages 2 are aligned in lines crosswise to path T solely by the action of flap 62 on surface 76 (Figure 3b).

## Claims

1. A unit (1) for grouping packages (2) along a transfer path (T), said unit (1) comprising:
- an input station (5) receiving groups (3) of said packages (2) arranged in longitudinal lines parallel to said transfer path (T); and
- aligning means (45, 46; 62) which interact with said packages (2) of each group (3) to align them in at least one line crosswise to said transfer path (T);
and being **characterized by** comprising a rotation device (60) which, following interaction of said aligning means (45, 46; 62)) with said packages (2) in each group (3), is selectively activated to rotate each group (3) by a predetermined angle about a direction (A) crosswise to said transfer path (T).

2. A unit as claimed in Claim 1, **characterized by** comprising guide means (90), which guide said rotation device (60) along a trajectory having a translation component parallel to said transfer path (T), and a rotation component about said direction (A).

3. A unit as claimed in Claim 2, **characterized in that** said guide means (90) comprise:
- a body (93) movable parallel to said transfer path (T);
- a pin (79) integral with said rotation device (60) and movable angularly about said direction (A) with respect to said body (93); said pin (79) being connected to said body (93) to move, integrally with it, in a direction parallel to said transfer path (T);
- a support (91) having a curved slot (92) extending along said transfer path (T) and shaped according to said trajectory; and
- a roller (97) connected functionally to said pin (79) and movable, inside said slot (92), along a curved path corresponding to the shape of said slot (92);
the movement of said body (93) moving said pin (79) in a direction parallel to said transfer path (T), and moving said roller (97) forward, inside said slot (92), along said curved path; and the forward movement of said roller (97) causing said pin (79) and said rotation device (60) to rotate about said direction (A) and translate along said transfer path (T).

4. A unit as claimed in Claim 3, **characterized in that** said pin (79) is housed at least partly inside said body (93).

5. A unit as claimed in Claim 3 or 4, **characterized in that** said guide means (90) comprise a drive member (116) connected functionally by a belt (98) to said body (93); said belt (98) comprising at least one active branch (105) extending parallel to said transfer path (T) and connected functionally to said body (93).

6. A unit as claimed in any one of Claims 2 to 5, **characterized in that** the rotation device (60) is movable between a closed configuration, in which it is integral with each said group (3), and an open configuration, in which it is detached from each said group (3).

7. A unit as claimed in Claim 6, **characterized in that** said rotation device (60) comprises a first flap (62) which cooperates with a first surface (76) defining, prior to rotation of each said group (3), a downstream end of the group (3); and two second flaps (63a, 63b) which cooperate with respective second surfaces (77, 78) defining, prior to rotation of each said group (3), opposite lateral ends of the group (3) with respect to said transfer path (T); said first flap and said second flaps (62; 63a, 63b) cooperating with said first surface and said second surfaces (76; 77, 78) to make the rotation device (60) and each said group (3) integral with each other as the group (3) is rotated.

8. A unit as claimed in Claim 6 or 7, **characterized by** comprising an actuating mechanism (80), which interacts with said rotation device (60) to move it between said open configuration and said closed configuration.

9. A unit as claimed in Claim 8, **characterized in that** said actuating mechanism (80) comprises a first cam (83) having at least one first work lobe (88, 89), which interacts with a first cam follower (112), connected functionally to said first flap (62), to cause said first flap (62) to cooperate with said first surface (76) of each said group (3); and a second cam (82) having two second work lobes (88, 89), which interact with respective second cam followers (110, 111), connected functionally to respective said second flaps (63a, 63b), to cause said second flaps (63a, 63b) to cooperate with respective said second surfaces (77, 78) of each said group (3).

10. A unit as claimed in Claim 9, **characterized in that** said first cam and said second cam (83, 82) are connected to each other to interact at different times with the respective said first cam follower and said second cam followers (112; 110, 111).

11. A unit as claimed in Claim 10, **characterized in that** said first cam and said second cam (83, 82) are connected to each other so that, to move said rotation device (60) from said open configuration to said closed configuration, said first cam (83) interacts with said first cam follower (112) before said second cam (82) interacts with said second cam followers (110, 111).

12. A unit as claimed in any one of Claims 9 to 11, **characterized in that** said first cam and said second cam (83, 82) rotate integrally about a common direction (A).

13. A unit as claimed in Claim 12, when dependent on Claim 3, **characterized in that** said pin (79) is movable angularly about said direction (A) with respect to said first and second cam (83, 82).

14. A unit as claimed in Claim 12 or 13, **characterized in that** said actuating mechanism (80) comprises a motor (117); a first pulley (86) connected angularly to said first and second cam (83, 82); and a belt (84) connecting said motor (117) to said first pulley (86).

15. A unit as claimed in Claim 14, **characterized in that** said first pulley (86) is a movable-axis pulley.

16. A unit as claimed in Claim 14 or 15, when dependent on Claim 3, **characterized in that** said actuating mechanism (80) comprises a movable-axis second pulley (85a) interposed between said first pulley (86) and said motor (117); said second pulley (85a) being connected to said body (93).

17. A unit as claimed in any one of the foregoing Claims, **characterized in that** said aligning means (45, 46) comprise at least one aligning surface (46), against which said packages (2) in each said group (3) upstream from the aligning surface (46) come to rest and are aligned in said line crosswise to said transfer path (T).

18. A unit as claimed in Claim 17, **characterized in that** said aligning surface (46) is advanced cyclically along a first path (R) having at least one work portion (R₁) parallel to said transfer path (T).

19. A unit as claimed in any one of Claims 7 to 18, **characterized in that** said aligning surface is defined by said first flap (62), which, on cooperating with said first surface (76) of each said group (3), aligns said packages (2) of said group (3) in said line crosswise to said transfer path (T).

20. A unit as claimed in any one of the foregoing Claims, **characterized by** comprising a movable conveying surface (9) supplied at predetermined time intervals with a number of packages (2) equal to that in each group (3), and which feeds said packages (2) from said input station (5) to an output station (6) along said transfer path (T); and in that said direction (A) is perpendicular to said conveying surface (9).

21. A unit as claimed in any one of the foregoing Claims, **characterized in that** said predetermined angle is an angle of ninety degrees.

22. A method of grouping packages (2) along a transfer path (T), and comprising the steps of:
- supplying an input station (5) of a grouping unit (1) with groups (3) of said packages (2) arranged in longitudinal lines parallel to said transfer path (T); and
- aligning said packages (2) of each said group (3) in at least one line crosswise to said transfer path (T);
the method being **characterized by** comprising the further step of selectively rotating said packages (2) in each said group (3), by means of a rotation device (60) and after said aligning step, by a predetermined angle with respect to a direction (A) crosswise to said transfer path (T).

23. A method as claimed in Claim 22, **characterized in that** said rotating step is performed simultaneously with advance of said packages (2) in each said group (3) in a direction parallel to said transfer path (T).

24. A method as claimed in Claim 22 or 23, **characterized by** comprising, prior to said rotating step, the step of connecting each said group (3) and said rotation device (60) integrally with each other.

25. A method as claimed in Claim 24, **characterized in that** said connecting step comprises the substeps of:
- causing a first flap (62) of said rotation device (60) to cooperate with a first surface (76) defining, prior to rotation of each said group (3), a downstream end of the group (3); and
- causing two second flaps (63a, 63b) of said rotation device (60) to cooperate with respective second surfaces (77, 78) defining, prior to rotation of each said group (3), respective opposite lateral ends of each said group (3) with respect to said transfer path (T).

26. A method as claimed in Claim 25, **characterized in that** said substep of causing said first flap (62) to cooperate with said first surface (76), and said substep of causing said second flaps (63a, 63b) to cooperate with respective said second surfaces (77, 78), are performed at different times.

27. A method as claimed in Claim 26, **characterized in that** said substep of causing said first flap (62) to cooperate with said first surface (76) precedes said substep of causing said second flaps (63a, 63b) to cooperate with respective said second surfaces (77, 78).

28. A method as claimed in any one of Claims 22 to 27, **characterized in that** said aligning step comprises the step of bringing to rest against an aligning surface (46) said packages (2) of each said group (3) located upstream from said aligning surface (46).

29. A method as claimed in Claim 28, **characterized by** comprising the step of feeding said aligning surface (46) cyclically along a path (R) having at least one work portion (R₁) parallel to said transfer path (T).

30. A method as claimed in any one of Claims 25 to 29, **characterized in that** said aligning step is performed by said first flap (62) cooperating with said first surface (76) of each said group (3).
